# EUROPÄISCHE PATENTANMELDUNG

(11) **EP 4 434 805 A1**
(43) Veröffentlichungstag der Anmeldung: **25.09.2024**
(21) Anmeldenummer: 23163701.8
(22) Anmeldetag: 23.03.2023
(51) Int. Cl.: B60L 53/12, B60L 53/302, H01F 27/245

(54) **BODENBAUGRUPPE FÜR EINE INDUKTIVE LADEVORRICHTUNG**

(71) Anmelder: MAHLE International GmbH, 70376 Stuttgart (DE)
(72) Erfinder: BÖTTIGHEIMER, Mike, 70806 Kornwestheim (DE); HIMMER, Thomas, 73326 Reichenbach (Deggingen) (DE); LÄMMLE, Christopher, 70567 Stuttgart (DE); STEINBACH, Martin, 71336 Waiblingen (DE); SCHROTH, Holger, 75433 Maulbronn (DE)
(74) Vertreter: BRP Renaud & Partner mbB Rechtsanwälte Patentanwälte Steuerberater

(57) **Zusammenfassung**

Die vorliegende Erfindung betrifft eine Bodenbaugruppe (1) für eine induktive Ladevorrichtung (2),
- mit einer Grundplatte (8),
- mit einer Flachspule (5), die einen Leiter (9) aufweist,
- mit einer Kernanordnung (10) zur Magnetflussführung, die zumindest einen Kernkörper (11) aufweist,
- wobei zwischen dem zumindest einen Kernkörper (11) und der Grundplatte (8) ein unterer Hohlraum (14) ausgebildet ist,
- wobei zwischen zumindest einem Kernkörper (11) und der Grundplatte (8) zumindest eine Stütze (15) vorgesehen ist,
- wobei zumindest eine Stütze (15) aus einem Material mit einer Wärmeleitfähigkeit von λ > 5 W/(m K) ausgebildet ist,
- wobei die Flachspule (5) einen Litzenträger (12) aufweist, der zumindest ein Druckpodest (20) aufweist, über welches der Litzenträger (12) auf einem zugehörigen Kernkörper (11) aufliegt,
- wobei ein Wärmleitelement (29) vorgesehen ist, welches das Druckpodest (20) zumindest teilweise umgibt und den Litzenträger (12) wärmeübertragend mit dem Kernkörper (11) verbindet.

## Beschreibung

Die vorliegende Erfindung betrifft eine Bodenbaugruppe für eine induktive Ladevorrichtung zum induktiven Laden eines Kraftfahrzeugs.

Bei zumindest teilelektrisch angetriebenen Kraftfahrzeugen ist ein regelmäßiges Aufladen eines elektrischen Energiespeichers des Kraftfahrzeugs notwendig. Hierzu kann prinzipiell eine unmittelbare elektrische Verbindung zwischen dem Kraftfahrzeug und einer externen elektrischen Energiequelle, beispielsweise einem Stromanschluss, hergestellt werden. Dies erfordert jedoch eine manuelle Tätigkeit eines Benutzers.

Ferner ist es bekannt, das Kraftfahrzeug, das heißt insbesondere den elektrischen Energiespeicher induktiv aufzuladen. In einer Bodenbaugruppe ("Ground Assembly") außerhalb des Kraftfahrzeugs befindet sich eine Primärspule, die mit einer Sekundärspule ("Vehicle Assembly") im Kraftfahrzeug induktiv zusammenwirkt, um den Energiespeicher aufzuladen.

Im Betrieb der Ladevorrichtung befindet sich das zu ladende Kraftfahrzeug auf einem Untergrund über der Bodenbaugruppe, weshalb die Bodenbaugruppe derart auszulegen ist, dass sie die Last des zu ladenden Kraftfahrzeugs tragen kann. Weiter kann im Betrieb der Ladevorrichtung in der Bodenbaugruppe durch die erbrachte Ladeleistung Wärme entstehen, die zu einem unerwünschten Temperaturanstieg der Bodenbaugruppe und damit verbunden auch zu einem Versagen der elektrischen und/oder elektromagnetischen Komponenten führen kann.

Eine unerwünschte Erhitzung der Bodenbaugruppe kann insbesondere zwischen einem Leiter einer Flachspule und einem Kernkörper auftreten. In diesem Bereich können aufgrund der sehr hohen Feldstärken keine elektrisch leitfähigen Materialien verwendet werden, so dass eine Wärmeleitung zwischen Leiter und Kernkörper (Magnetfeldleiter) immer mit einem großen Temperaturunterscheid einhergeht. Dies ist besonders deshalb kritisch zu sehen, da in dem Leiter nach gängiger Auslegung etwa doppelt so hohe Verluste anfallen, als in den Kernkörpern, so dass eine Grenztemperatur eines handelsüblichen Leiters (ca. 140°C) für eine Bodenbaugruppe mit 11 kW Leistung nur mit sehr niedrigen Temperaturen einer Wärmesenke (Grundplatte) eingehalten werden kann. Diese niedrige Temperatur lässt sich aber insbesondere bei ungünstigen klimatischen Bedingungen (z.B. Heißlandbedingungen mit einer max. Umgebungstemperatur von 50°C) nicht oder nur mit großem Aufwand (Bauraum, Kosten) bereitstellen, weshalb hier ein frühes Derating durchgeführt wird, sodass der Kunde anstelle von z.B. 11 kW evtl. nur noch mit 6kW laden kann. Dieser Betriebspunkt kann bei einem schlechten Kühlkonzept bereits nach mehreren Minuten eintreten.

Die vorliegende Erfindung beschäftigt sich deshalb mit dem Problem, für eine Bodenbaugruppe für eine induktive Ladevorrichtung eine verbesserte oder zumindest andere Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein frühes Derarting in einer Bodenbaugruppe zu vermeiden, indem eine gezielte Wärmeabfuhr von einem Leiter einer Flachspule der Bodenbaugruppe in einen Kernkörper und von da in eine Grundplatte ermöglicht und dadurch eine effiziente Kühlung der Flachspule erreicht wird. Mit der erfindungsgemäßen Bodenbaugruppe können eine höhere Ladeleistung bei gleichem Leiterquerschnitt oder eine gleiche Ladeleistung bei geringerem Leiterquerschnitt übertragen werden. Die erfindungsgemäße Bodenbaugruppe für eine induktive Ladevorrichtung zum induktiven Laden eines auf einem Untergrund abgestellten Kraftfahrzeugs, beispielsweise eines Elektrofahrzeugs, weist im Detail eine insbesondere als Kühlplatte ausgebildete Grundplatte auf, die sich quer zu einer Abstandsrichtung plattenförmig erstreckt. Die Abstandsrichtung ist dabei die Flächennormale der Grundplatte und im Einbauzustand üblicherweise eine Vertikale. Die erfindungsgemäße Bodenbaugruppe weist darüber hinaus zumindest eine Flachspule auf, die als Primärspule bzw. Feldspule ausgebildet ist und die einen spiralförmig gewundenen Leiter besitzt und zugleich in Abstandsrichtung zur Grundplatte beabstandet ist. Ebenfalls vorgesehen ist eine Kernanordnung zur Magnetflussführung, die in Abstandsrichtung zur Grundplatte und zur Flachspule beabstandet und zwischen der Grundplatte und der Flachspule angeordnet ist. Zwischen dem Kernkörper und der Grundplatte ist dabei ein unterer Hohlraum ausgebildet, in welchem zumindest eine Stütze angeordnet ist, so dass sich diese zumindest eine Stütze in Abstandsrichtung durch den unteren Hohlraum erstreckt. Über die zumindest eine Stütze wird der Kernkörper und damit die Kernanordnung auf der Grundplatte abgestützt. Die Flachspule besitzt darüber hinaus einen Litzenträger, der zumindest ein koaxial zu einer zugehörigen Stütze angeordnetes Druckpodest aufweist, über welchen der Litzenträger auf einem zugehörigen Kernkörper der Kernanordnung aufliegt, wobei ein Wärmleitelement vorgesehen ist, welches das Druckpodest zumindest teilweise umgibt und den Litzenträger wärmeübertragend mit dem Kernkörper verbindet. Die zumindest eine Stütze ist nun als Wärmeleitelement aus einem Material mit einer Wärmeleitfähigkeit von λ > 5 W/(m·K) ausgebildet. Erwärmt sich somit im Betrieb der erfindungsgemäßen Bodenbaugruppe die Flachspule, so kann der Leiter nicht nur durch die Stütze und die Ferritanordnung, sondern zugleich auch über das das Druckpodest umgebende Wärmeleitelement entwärmt und damit gekühlt werden, wodurch eine gleiche Ladeleistung bei geringerem Querschnitt des Leiters der Flachspule und/oder der Ferrite der Kernanordnung oder eine höhere Ladeleistung bei gleichem Querschnitt des Leiters der Flachspule und/oder der Ferrite der Kernanordnung erreicht werden können. Durch das erfindungsgemäße koaxial zur jeweiligen Achse der Stütze angeordnete Druckpodest am Litzenträger kann darüber hinaus eine Positionierung der Stütze in Bezug auf den zugehörigen Kernkörper in einem Bereich erfolgen, in dem es selbst beim Einsatz von metallischen Werkstoffen für die Stütze nicht zu Wirbelstromverlusten bzw. Hystereseverlusten kommen kann. Die einzelnen Kernkörper, beispielsweise die Ferritplatten, sind dabei quer zur Abstandsrichtung voneinander beabstandet, wobei quer zur Abstandsrichtung die magnetische Flussdichte sowohl zwischen den einzelnen Kernkörpern, als auch in deren Randbereich deutlich größer ist, als im jeweiligen Zentralbereich des Kernkörpers, in dem die Stütze angeordnet ist. Zudem ist es dadurch möglich, Lasten, beispielsweise von auf der Bodenbaugruppe fahrenden Fahrzeugen, vorzugsweise ausschließlich als Drucklasten und nicht als Biegelasten über die Druckpodeste in die Kernkörper und von diesen in die Stützen einzuleiten. Die Anordnung der Stützen in Bezug auf den zugehörigen Kernkörper erfolgt dabei in dem Zentralbereich, wodurch sowohl die mechanische Belastbarkeit gesteigert als auch eine Beeinflussung eines magnetischen Feldes der Flachspule minimiert werden kann. Der Zentralbereich ist dabei durch beispielsweise 80% eines Durchmessers der einzelnen Kernkörper jeweils in Längsrichtung und Breitenrichtung, vorzugsweise 70% des Durchmessers der einzelnen Kernkörper jeweils in Längsrichtung und Breitenrichtung, besonders bevorzugt 50% des Durchmessers der einzelnen Kernkörper jeweils in Längsrichtung und Breitenrichtung und ganz besonders bevorzugt 30% des Durchmessers der einzelnen Kernkörper jeweils in Längsrichtung und Breitenrichtung begrenzt.

Die erfindungsgemäße Bodenbaugruppe kann dabei versenkt in einem Untergrund, insbesondere oberflächenfluchtend zu diesem, angeordnet sein, wobei alternativ selbstverständlich auch eine Anordnung auf dem Untergrund denkbar ist.

Bei einer vorteilhaften Weiterbildung ist die Grundplatte als Kühlplatte mit zumindest einem Kühlkanal für ein Kühlmittel ausgebildet. Hierdurch ist eine aktive Kühlung der Grundplatte im Betrieb möglich, wobei die wärmeleitenden Stützen gleichzeitig auch eine Kühlung der im Einbauzustand darüber angeordneten Kernanordnung bzw. der Kernkörper und der Flachspule bewirken. Zudem kühlt die aktiv gekühlte Grundplatte wiederum die Luft innerhalb des unteren Hohlraumes, wodurch eine Kühlung einer dort angeordneten Elektronik sowie auch eine Luftkühlung der oberhalb des unteren Hohlraums angeordneten Kernanordnung bzw. Kernkörper möglich ist. Bereiche, auf denen die jeweiligen Stützen auf der Grundplatte aufliegen, besitzen dabei vorzugsweise keine Kühlkanäle, um eine ausreichende Druckstabilität gewährleisten zu können.

Bei einer vorteilhaften Weiterbildung der erfindungsgemäßen Bodenbaugruppe weist das Wärmeleitelement in Kunststoff, beispielsweise in Silikon, eingebettete thermisch leitfähige Partikel auf, wobei der Kunststoff eine Shore Härte von H < 10 aufweist. Ein derartiges Wärmeleitelement, welches auch als thermisches Interfacematerial (TIM) bezeichnet wird, bietet den großen Vorteil, dass auch quer zur Abstandsrichtung weiter von der als Wärmeleitelement ausgebildeten Stütze entfernte Bereiche des elektrischen Leiters der Flachspule zuverlässig entwärmt und damit gekühlt werden können, da das Wärmeleitelement einen direkten Übertrag der abzuführenden Wärme in den Kernkörper, beispielsweise die Ferritplatte, und darüber in die als Wärmeleitelement ausgebildete Stütze ermöglicht. Hierdurch kann ein Temperaturunterschied innerhalb des Kernkörpers und innerhalb der Flachspule klein gehalten werden. Durch das vergleichsweise weiche Kunststoffmaterial des Wärmeleitelements ist es zudem möglich, hohe Drucklasten, beispielsweise von auf der Bodenbaugruppe fahrenden Kraftfahrzeugen, ausschließlich als Drucklasten in die jeweiligen Stützen einzuleiten, da das vergleichsweise elastische Wärmeleitelement nicht zu Biegezugspannungen und damit der Gefahr eines Bruchs des jeweiligen Kernkörpers führt. Eine Übertragung der durch beispielsweise der Bodenbaugruppe fahrenden Kraftfahrzeugen entstehenden Lasten erfolgt somit vom Litzenträger auf den darunter angeordneten Kernkörper und die wiederum darunter angeordnete Stütze nahezu ausschließlich über das Druckpodest, wodurch in dem Kernkörper, beispielsweise der Ferritplatte, keine Biegezugspannungen auftreten.

Zweckmäßig weist das Wärmeleitelement Ausnehmungen auf, wobei eine Dichte und/oder eine Größe der Ausnehmungen mit zunehmenden Abstand zum Druckpodest zunimmt oder die Ausnehmungen 32 gleichmäßig verteilt angeordnet sind. Um eine Verdrängung des Wärmeleitelements, beispielsweise bestehend aus einem Elastomermaterial mit elektromagnetischen neutralen Partikeln, insbesondere Aluminium-Nitrit-Partikeln, aufgrund einer beim Überfahren der Bodenbaugruppe mit Kraftfahrzeugen auftretenden Durchbiegung des Litzenträgers zu gewährleisten, kann das Wärmeleitelement mit den zuvor genannten Ausnehmungen, beispielsweise Fehlstellen, ausgestattet sein. Die höhere Dichte und/oder Größe der Ausnehmungen mit zunehmenden Abstand zum Druckpodest, nimmt die Fähigkeit des Wärmeleitelements Druckbelastungen zu übertragen ab, da die Ausnehmungen Hohlräume darstellen, in welche sich das Wärmeleitelement, beispielsweise ein elastomerer Kunststoff, bei Auftreten von Druckbelastungen verdrängen lässt, ohne dabei größere Drucklasten auf den Kernkörper zu übertragen, in welchem diese in diesem Bereich zu ungünstigen Zugspannungen führen würden.

Durch die einzelnen Ausnehmungen in dem Wärmeleitelement entsteht eine Art Lochmuster zwischen einem unteren Litzenträger bzw. dem Litzenträger und dem Kernkörper, wobei dieses Lochmuster als regelmäßiges Lochmuster ausgeführt sein kann oder sich am Maß der Durchbiegung des Litzenträgers zwischen den einzelnen Stützen orientieren kann. Dabei sind in der Nähe der Stützen aufgrund der dort geringen Durchbiegung weniger Ausnehmungen bzw. Löcher vorgesehen und in weiter davon entfernten Bereichen größere bzw. mehr Ausnehmungen, in welche viel bzw. mehr Material des Wärmeleitelements bei hoher Kompression verdrängt werden kann. Durch eine solche Verteilung der Ausnehmungen und des damit einhergehenden ungleichmäßigen thermischen Übergangswiderstandes zwischen dem Leiter der Flachspule und dem Kernkörper kann zudem erreicht werden, dass die Verlustwärme des Leiters bereits innerhalb der Leiterwindungen in Richtung des Stützenbereichs geleitet wird und somit eine laterale Wärmeleitung im Kernkörper, welche höhere Temperaturunterschiede zur Folge hätte, reduziert werden kann.

Bei einer vorteilhaften Weiterbildung der erfindungsgemäßen Bodenbaugruppe ist das Wärmeleitelement als separates Bauteil, beispielsweise als Lochfolie, ausgebildet oder im Siebdruckverfahren auf den Litzenträger oder dem Kernkörper aufgebracht. Beim Einbau mittels beispielsweise Siebdruckverfahren oder als dispensierte Paste, kann beispielsweise ein eingebrachtes und noch nicht ausgehärtetes Kunststoffmaterial des Wärmeleitelements zudem als Klebstoff zwischen dem Litzenträger und dem Kernkörper dienen. Zur Erhöhung der thermischen Leitfähigkeit des Kunststoffs des Wärmeleitelements kann dieser zudem mit elektromagnetisch neutralen Partikeln, wie beispielsweise Aluminium-Nitrit-Partikel versetzt werden. Hierdurch kann eine thermische Leitfähigkeit auf > 0,5 W/m K, insbesondere > 1,0 w/m K erhöht werden. Hierdurch ist eine nochmals verbesserte Wärmeübertragung und damit Kühlung der Flachspule möglich.

Bei einer weiteren vorteilhaften Ausführungsform der erfindungsgemäßen Bodengruppe weist der Litzenträger einen oberen Litzenträger und einen unteren Litzenträger auf, zwischen dem die Flachspule angeordnet ist. Hierdurch ist eine vergleichsweise einfache Montage der Flachspule in dem aus zwei Teilen, nämlich dem oberen Litzenträger und dem unteren Litzenträger bestehenden Litzenträger möglich. Das erfindungsgemäße Wärmeleitelement ist dabei wärmeübertragend sowohl mit dem Kernkörper als auch mit dem unteren Litzenträger außerhalb des Druckpodests verbunden und ermöglicht damit eine gleichmäßige Entwärmung und Kühlung der Flachspule. Der Leiter der Flachspule kann in diesem Fall zumindest teilweise von einer wärmeleitenden Umhüllung umgeben sein. Eine derartige Umhüllung kann insbesondere auch bei einem einstückig ausgebildeten Litzenträger von Vorteil sein, da hierdurch ein thermischer Widerstand zwischen dem elektrischen Leiter der Flachspule und dem Litzenträger reduziert werden kann. Eine derartige Umhüllung kann aber auch bei einem geteilten Litzenträger eingesetzt werden, bei dem ein oberer Litzenträger und ein unterer Litzenträger nach Einsetzen einer Flachspule zusammengeführt werden. Hierzu kann beispielsweise in dem oberen und unteren Litzenträger eine in Bezug auf den elektrischen Leiter der Flachspule größere Negativformen vorgesehen werden, so dass der elektrische Leiter bei vollständig zusammengefahren oberen und unteren Litzenträger mit Spiel in den Litzenträger angeordnet ist. Hierzu kann die Umhüllung in der Form eines vor dem Einbringen der Litze in die Kavitäten des oberen und/oder unteren Litzenträgers eingebrachten dispensierten elastomeren Interfacematerials (Umhüllung) umgesetzt werden. Ein solches dispensiertes Material wird anschließend durch das Einbringen der Litze und das Zusammenführen des oberen und unteren Litzenträgers im Spalt zwischen dem Litzenträger und dem elektrischen Leiter verpresst und füllt diesen zumindest teilweise aus. Um dabei ein Verdrängen des Interfacematerials (Umhüllung) in der Kavität zu vereinfachen, ist es sinnvoll, in der Nut in gewissen Abständen Bereiche ohne Interfacematerial vorzusehen. Für eine Entwärmung des Leiters der Flachspule sind diese begrenzten Bereiche mit schlechterer thermischer Anbindung unproblematisch, da das Kupfer des Leiters eine sehr gute laterale Wärmeleitfähigkeit besitzt und so die Entwärmung über benachbarte, gut thermisch angebundene Bereiche erfolgen kann.

Alternativ oder ergänzend ist auch denkbar, dass das Interfacematerial (Umhüllung) nach dem Zusammenbau des oberen und unteren Litzenträgers und des darin angeordneten Leiters über entsprechende Öffnungen und Kanäle in Zwischenräume zwischen dem Leiter und dem jeweiligen Litzenträger eingepresst wird. Hierzu können in regelmäßigen Abständen Entlüftungsöffnungen vorgesehen werden. In einer besonders bevorzugten Form werden dabei die Kanäle für das thermische Interfacematerial, das heißt die Umhüllung, in lateraler Richtung zum Leiter in Bereichen zwischen zwei Leitern geführt, wodurch das ausgehärtete thermische Interfacematerial zu einer besseren mechanischen Verbindung des oberen und unteren Litzenträgers führt.

Um einen Litzenträger möglichst gewichtsoptimiert herstellen zu können, kann auch beispielsweise am unteren Litzenträger eine Kavität vorgesehen sein, in welche die Flachspule eingelegt wird. Der Leiter der Flachspule kann hierbei ebenfalls über ein entsprechendes thermisches Interfacematerial an den unteren Litzenträger wärmeübertragend angebunden werden. Alternativ ist auch denkbar, dass nach dem Einlegen der Flachspule in die Kavität des unteren Litzenträgers der Rest der Kavität des unteren Litzenträgers mit einem Vergussmaterial, beispielsweise einem Epoxidharz, vergossen oder zumindest teilweise vergossen wird, wodurch der elektrische Leiter der Flachspule thermisch optimiert an den unteren Litzenträger angebunden ist. Eine thermische Anbindung des Leiters an den unteren Litzenträger wird dabei bevorzugt mit einem thermischen Übergangswiderstand von < 0,2 K/W, bevorzugt von < 0,1 K/W umgesetzt.

Bei einer weiteren vorteilhaften Ausführungsform der erfindungsgemäßen Lösung durchdringt der Leiter der Flachspule den unteren Litzenträger, wobei zwischen dem Leiter und dem Kernkörper eine elektrisch isolierende Schicht, insbesondere eine Isolationsfolie, mit einer Durchschlagfestigkeit von D > 10 kV, insbesondere von D > 20 kV angeordnet ist. Hierdurch ist eine ausreichende Isolierung des Leiters gegenüber dem Kernkörper gegeben um einen unerwünschten elektrischen Überschlag von dem Leiter auf den Kernkörper zu vermeiden.

Bei einer weiteren vorteilhaften Ausführungsform der Erfindung ist ein Litzenhalter aus Kunststoff vorgesehen, der den Leiter in seiner Spiralform hält, wobei der Litzenhalter und der Leiter vollständig in eine Kunststoffmatrix eingebettet sind und wobei der Leiter mit einer die Wärmeleitung und die Haftung zur Kunststoffmatrix erhöhenden Beschichtung überzogen sein kann. Bei dieser Variante kann der Litzenträger als vollständig umgossene Einheit in der Form ausgeführt werden, dass ein vergleichsweise filigraner Litzenhalter aus Kunststoff den Leiter bzw. die Litze in der gewünschte Spiralform aufnimmt und anschließend in einer dafür vorgesehenen Form vollständig umgossen wird. Bevorzugt erfolgt dies in einer zur Einbaulage in der Bodenbaugruppe umgedrehten Lage, so dass keine Durchdringung des Litzenhalters durch das Vergussmaterial des Litzenträgers auf der Seite entstehen kann, die in der Bodenbaugruppe den jeweiligen Kernkörpern zugewandt ist. Hierdurch kann die elektrische Durchschlagfestigkeit gewährleistet werden. Durch die vorgesehene Beschichtung kann nicht nur ein mechanischer Verbund zwischen Leiter und Litzenträger, sondern auch eine Wärmeübertragung zwischen diesen Komponenten verbessert werden.

Zweckmäßig sind an dem Litzenträger Positionierelemente zur Lagefixierung zumindest eines Kernkörpers quer zur Abstandsrichtung angeordnet. Derartige Positionierelemente können beispielsweise einstückig mit dem Litzenträger bzw. dem unteren Litzenträger ausgebildet sein und der zuverlässigen Positionierung der Kernkörper quer zur Abstandsrichtung dienen. Durch derartige Positionierelemente kann auch eine Montage der erfindungsgemäßen Bodenbaugruppe erleichtert werden.

Zweckmäßig führt durch den unteren Hohlraum der erfindungsgemäßen Bodenbaugruppe ein Luftströmungspfad. Eine Kühlung der Kernanordnung und darüber auch der Flachspule kann somit beispielsweise ausschließlich durch eine Luftströmung erfolgen, die in dem unteren Hohlraum strömt, oder durch eine derartige Luftströmung und zusätzlich eine als Kühlplatte ausgebildete Grundplatte. Letztere Version bietet dabei eine deutlich höhere Kühlleistung und ermöglicht dadurch höhere Ladeleistungen der Ladevorrichtung.

Bei einer vorteilhaften Weiterbildung der erfindungsgemäßen Lösung weist die zumindest eine Stütze aus einem Material mit einer Wärmeleitfähigkeit von λ > 10 W/(m K), insbesondere einer Wärmeleitfähigkeit von λ > 50 W/(m K) oder λ > 100 W/(m K), auf. Als Material für die jeweiligen Stützen kann somit beispielsweise Eisen mit einer Wärmeleitfähigkeit λ von ca. 80 W/(m K), aber auch Aluminium mit einer Wärmeleitfähigkeit λ von 235 W/(m·K) in Frage kommen. Rein theoretisch ist dabei sogar denkbar, dass Kunststoffe mit entsprechenden Metallpartikeln zum Einsatz kommen, welche die für die gewünschte Kühlwirkung erforderliche Wärmeübertragung bzw. Wärmeleitfähigkeit von λ > 5 W/(m·K) bereitstellen können.

Bei einer vorteilhaften Weiterbildung der erfindungsgemäßen Lösung ist die zumindest eine Stütze zumindest teilweise aus Metall, insbesondere aus Aluminium, ausgebildet. Alternativ ist auch denkbar, dass die zumindest eine Stütze teilweise aus Grafit oder aus Keramik, insbesondere aus Aluminiumnitrid oder Aluminiumsilizid ausgebildet ist. Grafit besitzt dabei eine Wärmeleitfähigkeit λ von 15 bis 20 W/(m.K), während eine Aluminiumnitridkeramik sogar eine Leitfähigkeit λ von 180 W/(m·K) besitzen kann. Der Einsatz insbesondere derartiger Aluminiumnitridkeramiken ist insbesondere dort von großem Interesse, wo viel Wärme abgeführt werden muss, ein Werkstoff jedoch unter Umständen jedoch nicht elektrisch leitend sein darf.

Die Grundplatte selbst ist vorteilhafterweise aus einem Metall oder einer Metalllegierung, beispielsweise Aluminium, ausgebildet, um eine Wärmeübertragung zwischen Kühlmittel, Grundplatte, Luft und Stützen zu verbessern. Durch die beabstandete Anordnung der Grundplatte zur Flachspule und der Kernanordnung wird darüber hinaus eine elektromagnetische Wechselwirkung der Grundplatte mit der Flachspule und der Kernanordnung minimiert bzw. zumindest reduziert. Ein Abstand der Grundplatte zur Kernanordnung in Abstandsrichtung kann hierbei zwischen mehreren Millimetern und mehreren Zentimetern betragen. Durch die Herstellung der Grundplatte aus Metall bzw. einer Metalllegierung erfolgt zugleich eine elektromagnetische Abschirmung der Bodenbaugruppe nach unten zum Untergrund hin.

Bei einer besonders vorteilhaften Ausführungsform der erfindungsgemäßen Bodenbaugruppe ist zwischen zumindest einer Stütze und einem Kernkörper eine Verteilerplatte vorgesehen, die über eine adhäsive Schicht mit einer Wärmeleitfähigkeit von λ > 0,8 W/(m·K) und/oder einem Schubmodul von G < 10 MPa mit der Kernanordnung verbunden ist. Da die adhäsive Schicht, beispielsweise eine Klebstoffschicht, äußerst dünn ist, reicht hier auch eine reduzierte Wärmeleitfähigkeit λ von λ > 0,8 W/(m·K). Um darüber hinaus unterschiedliche thermische Ausdehnungskoeffizienten zwischen den Kernkörpern, beispielsweise einer Ferritplatte, und der Verteilerplatte ausgleichen zu können, ist es vorteilhaft, die Klebstoffschicht bzw. generell die adhäsive Schicht mit einem Schubmodul G < 10 MPa auszustatten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Schnitt durch eine erfindungsgemäße Bodenbaugruppe einer induktiven Ladevorrichtung,
- Fig. 2: eine stark vereinfachte Darstellung der induktiven Ladevorrichtung mit der Bodenbaugruppe und einem Kraftfahrzeug,
- Fig. 3: eine Darstellung wie in Fig. 1, jedoch bei einer anderen Ausführungsform,
- Fig. 4a-f: unterschiedliche Wärmeleitelemente mit unterschiedlichen Ausnehmungen,
- Fig. 5a-e: Schnittdarstellungen durch unterschiedliche Ausführungsformen des Litzenträgers.

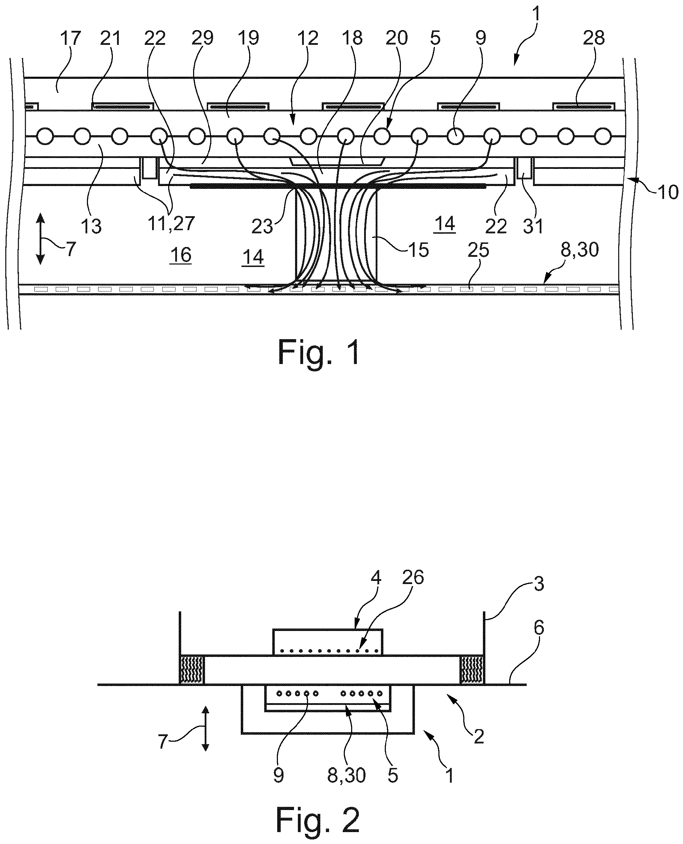

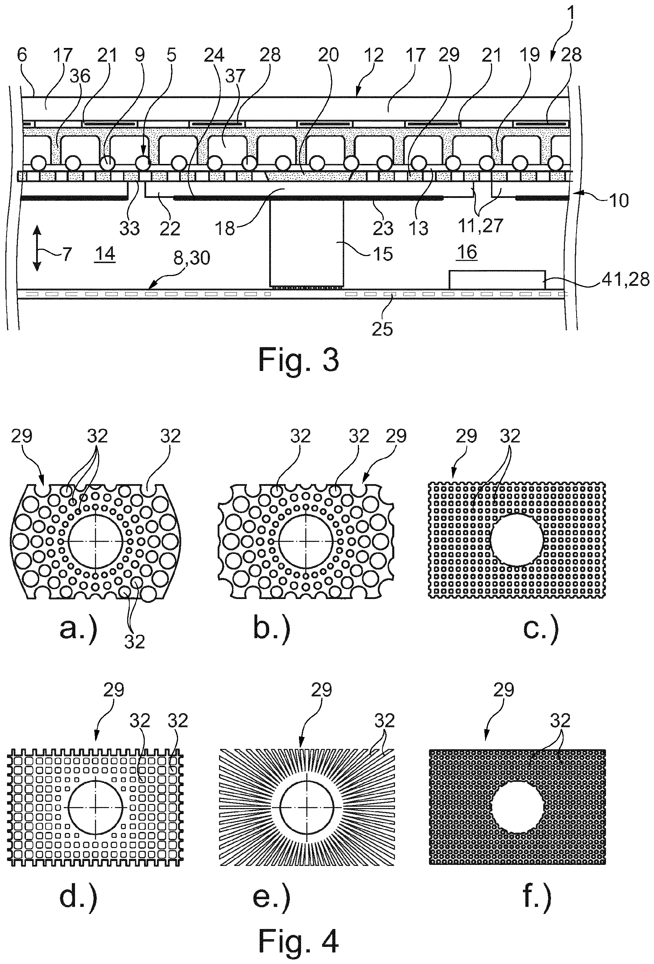

Eine erfindungsgemäße Bodenbaugruppe 1, wie sie beispielsweise in den Figuren 1 und 3 gezeigt ist, kommt in einer in Fig. 2 dargestellten Ladevorrichtung 2 zum induktiven Laden eines Kraftfahrzeugs 3 zum Einsatz. Zu diesem Zweck wirkt die Bodenbaugruppe 1 mit einer zugehörigen Baugruppe 4 des Kraftfahrzeugs 3, beispielsweise einer Sekundärspule 26, zusammen. Die Wechselwirkung erfolgt insbesondere durch eine Flachspule 5 der Bodenbaugruppe 1, welche als Primärspule der Ladevorrichtung 2 dient, und der Sekundärspule 26 der Baugruppe 4 des Kraftfahrzeugs 3. Das Kraftfahrzeug 3 ist zum induktiven Laden mittels der Ladevorrichtung 2 auf einem Untergrund 6 abgestellt. Im gezeigten Ausführungsbeispiel ist die Bodenbaugruppe 1 versenkt im Untergrund 6 angeordnet, kann aber auch auf diesem angeordnet sein.

Die Bodenbaugruppe 1 weist eine beispielsweise als Kühlplatte 30 ausgebildete Grundplatte 8 auf. Die Abstandsrichtung 7 verläuft hierbei parallel zu einer Normalen des Untergrunds 6 und insbesondere entlang der Lotrichtung. Entsprechend der Figuren 1 und 3 ist die Flachspule 5 in Abstandsrichtung 7 zur Grundplatte 8 beabstandet. Die Flachspule 5 umfasst einen spiralförmig gewundenen Leiter 9, der beispielsweise aus Kupfer ausgebildet sein kann. Die Bodenbaugruppe 1 umfasst ferner eine Kernanordnung 10 zur Magnetflussführung, die in Abstandsrichtung 7 zur Grundplatte 8 und zur Flachspule 5 beabstandet und zwischen der Grundplatte 8 und einem spiralförmig gewundenen Leiter 9 angeordnet ist und zudem zumindest einen Kernkörper 11 aufweist. Zudem ist die Kernanordnung 10 in Abstandsrichtung 7 zur Flachspule 5 beabstandet. Hierbei ist die Kernanordnung 10 mit dem zumindest einen Kernkörper 11 zwischen der Grundplatte 8 und der Flachspule 5 angeordnet. Der Kernkörper 11 kann aus einem weichmagnetischen Werkstoff insbesondere aus einem weichmagnetischen Ferrit ausgebildet sein. Zwischen dem zumindest einen Kernkörper 11 und der Grundplatte 8 ist ein unterer Hohlraum 14 ausgebildet, durch den ein Luftströmungspfad führen kann und/oder in dem zumindest ein elektronisches Bauteil 41, insbesondere eine Platine 28, angeordnet sein kann.

Die Kernanordnung 10, insbesondere der zumindest eine Kernkörper 11, stützt sich beispielsweise direkt auf einer Stütze 15 ab (vgl. Fig. 1 und 3). Der Kernkörper 11 kann beispielsweise als Ferritplatte 27 ausgebildet sein. Der jeweilige Kernkörper 11 ist plattenförmig ausgebildet und erstreckt sich in Breitenrichtung sowie einer quer zur Breitenrichtung und quer zur Abstandsrichtung 7 verlaufenden Längsrichtung plattenförmig. Die Stütze 15 erstreckt sich in Abstandsrichtung 7 durch den unteren Hohlraum 14 und ist als Wärmeleitelement aus einem Material mit einer Wärmeleitfähigkeit von λ > 5 W/(m K) ausgebildet. Zudem weist die Flachspule 5 einen Litzenträger 12 auf, mit einem oberen Litzenträger 19 und einem unteren Litzenträger 13, zwischen denen der Leiter 9 der Flachspule 5 angeordnet ist. Der Litzenträger 12 trägt dabei den Leiter 9 der Flachspule 5, so dass hier auch von einem Leiterträger 9 gesprochen werden kann. Der Litzenträger 12 bzw. dessen unterer Litzenträger 13 weist ein koaxial zu einer zugehörigen Stütze 15 angeordnetes Druckpodest 20 auf, über welches der Litzenträger 12 auf einem zugehörigen Kernkörper 11 der Kernanordnung 10 aufliegt, wodurch es möglich ist, Lasten, beispielsweise von auf der Bodenbaugruppe 1 fahrenden Kraftfahrzeugen 3 ausschließlich als Drucklasten und nicht als Biegelasten in die Kernkörper 11 und von diesen in die Stützen 15 einzuleiten.

Das Druckpodest 20 kann dabei separat zum unteren Litzenträger 13 oder einstückig mit diesem ausgebildet sein. Da Ferrit sehr druckstabil ist, kann ein solcher Kernkörper 11 eine reine Druckbelastung sehr gut aufnehmen.

Um das Druckpodest 20 herum ist der untere Litzenträger 13 von dem Kernkörper 11 abgesetzt, das heißt beabstandet, sodass eine Lasteinleitung in den Kernkörper 11 ausschließlich über die Druckpodeste 20 erfolgt. Hierdurch können die mechanische Belastbarkeit und die Ladeleistung der Bodenbaugruppe 1 deutlich gesteigert werden. Um eine verbesserte Kühlung der Flachspule 5 erreichen zu können, ist ein Wärmleitelement 29 vorgesehen, das das Druckpodest 20 zumindest teilweise umgibt und den Litzenträger 12 wärmeübertragend mit dem Kernkörper 11 verbindet.

Das Wärmeleitelement 29 (thermisches Interfacematerial) kann dabei in Kunststoff, insbesondere in Silikon, eingebettete thermisch leitfähige Partikel aufweisen, wobei der Kunststoff vorzugsweise eine Shore Härte A < 10 aufweist. Das Wärmeleitelement 29 ist somit vergleichsweise weich ausgeführt und belastet dadurch bei einer Durchbiegung des Litzenträgers 12 aufgrund einer Überfahrlast zwischen den Hauptlastpfaden der Stützen 15 die Ferritplatte 27 nicht nennenswert. Eine solche Belastung würde bei der Lagerung der Ferritplatte 27 zu Biegezugspannungen führen und die Gefahr eines Bruchs des Kernkörpers 11 erhöhen.

Um die Verdrängung des Materials des Wärmeleitelements 29 aufgrund der Durchbiegung des Litzenträgers 12 zu gewährleisten, kann das Wärmeleitelement 29 Ausnehmungen 32 aufweisen (vgl. die Fig. 4a bis f), wobei eine Dichte und/oder eine Größe der Ausnehmungen 32 mit zunehmendem Abstand zum Druckpodest 20 zunimmt oder die Ausnehmungen 32 gleichmäßig verteilt angeordnet sind. Es können somit ausreichend Fehlstellen eingebaut werden. Ein Lochmuster im Wärmeleitelement 29 zwischen unterem Litzenträger 13 und Kernkörper 11 kann als regelmäßiges Lochmuster ausgeführt sein (vgl. Fig. 4c und 4f) oder sich - wie eingangs beschrieben - am Maß der Durchbiegung des Litzenträgers 12 zwischen den Stützen 15 orientieren. Die Ausnehmungen 32 selbst können rund (vgl. Fig. 4a, 4b, 4f), rechteckig (vgl. Fig. 4c, 4d) oder auch länglich, insbesondere in der Art radialer Strahlen ausgebildet sein (vgl. Fig. 4e). Dabei sind in der Nähe der Stützen 15 bzw. der Druckpodeste 20 aufgrund der dort geringen Durchbiegung weniger Ausnehmungen 32 vorgesehen und in weiter entfernten Bereichen mehr, in welche auch mehr Material des Wärmeleitelements 29 (TIM-Material) bei hoher Kompression verdrängt werden kann. Durch eine solche Verteilung der Ausnehmungen 32 und des damit einhergehenden ungleichmäßigen thermischen Übergangswiderstandes zwischen Litzenträger 12 und Ferritplatte 27 bzw. Kernkörper 11 kann zudem erreicht werden, dass sich die Verlustwärme der Flachspule 5 bereits innerhalb der Windungen des Leiters 9 in Richtung der Stützen 15 geleitet wird und somit die laterale Wärmeleitung im Kernkörper 11, welche höhere Temperaturunterschiede zur Folge hätte, reduziert wird.

Das Wärmeleitelement 29 kann beispielsweise als separates Bauteil, insbesondere als Lochfolie, oder als sequenziell dispensierte Paste oder als Siebdruck ausgebildet sein. Beim Einbau durch ein Dispens-Verfahren kann das eingebrachte und noch nicht ausgehärtete Wärmeleitelement 29 zudem als Klebstoff zwischen Litzenträger 12 bzw. unterem Litzenträger 13 und Kernkörper 11 dienen.

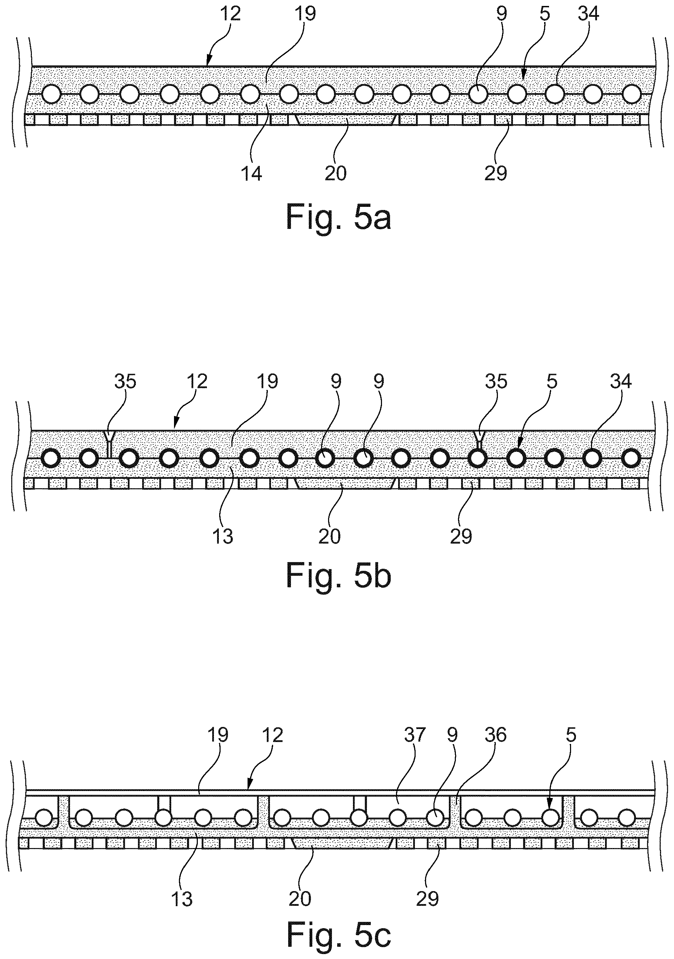

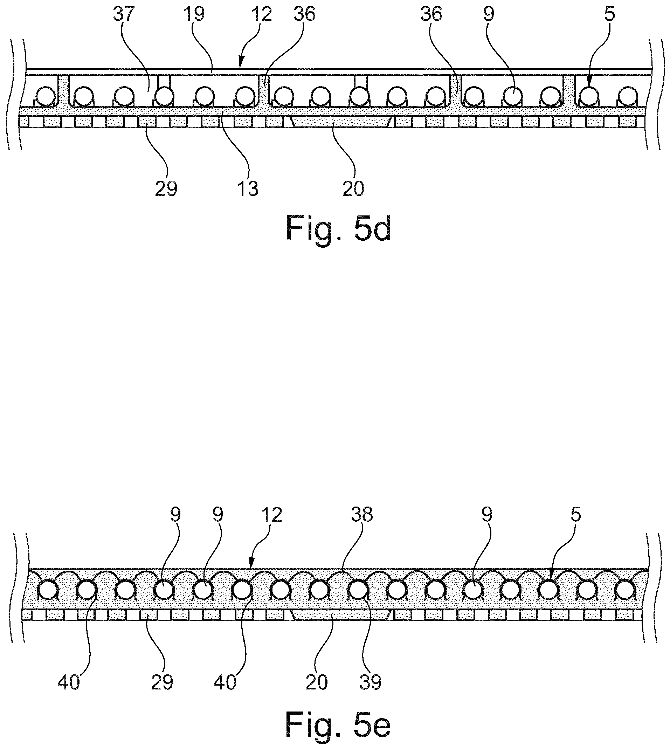

Gemäß den Fig. 1 und 5 weist der Litzenträger 12 einen oberen Litzenträger 19 und einen unteren Litzenträger 13 auf, zwischen denen die Flachspule 5 bzw. deren Leiter 9 angeordnet ist. Vom unteren Litzenträger 13 können Positionierelemente 31 in Richtung der Kernkörper 11 abstehen (vgl. Fig. 1), die eine Positionierung der Kernkörper 11 quer zur Abstandsrichtung 7 ermöglichen.

Der Kernkörper 11 weist ferner einen Zentralbereich 18 und zumindest einen Randbereich 22 auf (vgl. Fig.1 und 3). Zumindest einer dieser Stützen 15 ist dabei vorzugsweise quer zur Abstandsrichtung 7 innerhalb des Zentralbereichs 18 eines zugehörigen Kernkörpers 11 angeordnet und verbindet diesen und die Grundplatte 8 wärmeübertragend. Dies bietet den großen Vorteil, dass über die als Wärmeleitelemente ausgebildeten Stützen 15 sowohl die Kernanordnung 10, die Flachspule 5 mit deren Leiter 9 als auch die Kernkörper 11, beispielsweise die Ferritplatten 27, wärmeübertragend mit der als Kühlplatte 30 ausgebildeten Grundplatte 8 verbunden und darüber effektiv gekühlt werden können. Durch die Kontaktierung der Stützen 15 im zugehörigen Zentralbereich 18 mit dem zugehörigen Kernkörper 11 ist zudem eine Beeinflussung des durch die Flachspule 5 erzeugen Magnetfeldes und insbesondere einer magnetischen Flussdichte minimal, so dass für die erfindungsgemäß als Wärmeleitelemente ausgebildeten Stützen 15 sogar metallische Werkstoffe in Betracht kommen.

Die Stütze 15 füllt den unteren Hohlraum 14 lediglich teilweise aus, sodass ein Strömungsraum 16 für ein Fluid, in den gezeigten Ausführungsbeispielen für Luft, verbleibt, wodurch die Kernanordnung 10 über die Luft Wärme an die Grundplatte 8 abgeben und eine Kühlung der Kernanordnung 10 und der Flachspule 5 verbessert und folglich die Effizienz der Bodenbaugruppe 1 erhöht werden können. Somit ist es auch möglich, die Bodenbaugruppe 1 mit hohen Leistungen von insbesondere mehreren kW zu betreiben und folglich das zu ladende Kraftfahrzeug 3 schneller zu laden bzw. kein Derating in irgendeinem Betriebspunkt zu verursachen.

Zweckmäßig ist zwischen der zumindest einen Stütze 15 und dem Kernkörper 11 eine Verteilerplatte 23 angeordnet. Eine derartige Verteilerplatte 23 kann eine verbesserte Wärmeübertragung und damit eine verbesserte Kühlung der Kernanordnung 10 gewährleisten, wobei selbstverständlich klar ist, dass auch die Verteilerplatte 23 innerhalb des Zentralbereichs 18 angeordnet sein kann, um insbesondere eine Beeinflussung des Magnetfeldes und damit das Erzeugen von Wirbelstromverlusten zumindest zu minimieren. Da die Verteilerplatte 23 mit einer Dicke < 2 mm sehr flach und nah unterhalb der Kernanordnung 10 angeordnet ist, kann der zur Verteilerplatte 23 zugehörige Zentralbereich größer und der zur Verteilerplatte 23 zugehörige Randbereich kleiner sein als der zur Stütze 15 zugehörige Zentralbereich 18 bzw. Randbereich 22, ohne dass nicht zu tolerierende große zusätzlichen Verluste durch Wirbelströme oder Hysterese-Effekte in einem elektrisch leitfähigen Material der Verteilerplatte 23 entstehen.

Die Verteilerplatte 23 kann darüber hinaus über eine adhäsive Schicht 24 aus einem Material mit einer Wärmeleitfähigkeit von λ > 0,8 W/(m K) und/oder einem Schubmodul von G < 10 MPa mit der Kernanordnung 10 verbunden sein. Da die adhäsive Schicht 24, beispielsweise eine Klebstoffschicht, äußerst dünn ist und über eine große Anbindungsfläche zur Kernanordnung 10 verfügt, reicht hier auch eine reduzierte Wärmeleitfähigkeit λ von λ > 0,8 W/(m·K). Um darüber hinaus unterschiedliche thermische Ausdehnungskoeffizienten zwischen den Kernkörpern 11, beispielsweise einer Ferritplatte 27 und der Verteilerplatte 23 ausgleichen zu können, ist es vorteilhaft, die Klebstoffschicht bzw. generell die adhäsive Schicht 24 mit einem Schubmodul G > 10 MPa auszustatten. Die adhäsive Schicht 24, kann selbstverständlich auch direkt zwischen der Stütze 15 und dem Kernkörper 11 vorgesehen werden, sofern beispielsweise keine Verteilerplatte 23 vorgesehen ist. Ebenso kann eine zusätzliche adhäsive Schicht bei vorhandener Verteilerplatte 23 auch zwischen der Verteilerplatte 23 und der Stütze 15 vorgesehen sein.

Eine Dicke der Verteilerplatte 23 liegt im Bereich von 0,2 bis 2,0 mm. Die zumindest eine Verteilerplatte 23 kann dabei neben einer Vergrößerung der wärmeübertragenden Kontaktfläche zwischen Kernkörper 11 und Stütze 15 auch eine Abstützfunktion erfüllen.

In den gezeigten Ausführungsbeispielen weist die Bodenbaugruppe 1 eine Deckplatte 17 auf. Zwischen der Deckplatte 17 und dem oberen Litzenträger 19 sind Hohlräume 21 vorgesehen, in denen beispielsweise eine Platine 28 angeordnet sein kann. In den gezeigten Ausführungsbeispielen ist die Grundplatte 8 als eine Kühlplatte 30 ausgebildet, durch welche Kühlkanäle 25 für ein Kühlmittel verlaufen. Das Kühlmittel kühlt im Betrieb die Grundplatte 8 aktiv. Die aktive gekühlte Grundplatte 8 kühlt über die Stützen 15 die Kernanordnung 10 bzw. die Kernkörper 11 und die Flachspule 5 und zusätzlich die Luft und folglich über die Luft wiederum die Flachspule 5 und die Kernanordnung 10. Die Grundplatte 8 ist hierbei vorteilhaft aus einem Metall oder einer Metalllegierung, insbesondere Aluminium, hergestellt, um die Wärmeübertragung zwischen Kühlmittel, Grundplatte 8 und Luft zu verbessern. Durch die beabstandete Anordnung der Grundplatte 8 zur Flachspule 5 und Kernanordnung 10 wird eine magnetische bzw. elektromagnetische Wechselwirkung der Grundplatte 8 mit der Flachspule 5 und der Kernanordnung 10 minimiert oder zumindest reduziert. Der Abstand der Grundplatte 8 zu Kernkörper 11 kann zwischen 20 und 80 mm liegen. Durch die Herstellung der Grundplatte 8 aus einem Metall oder einer Metalllegierung erfolgt zugleich eine elektromagnetische Abschirmung der Bodenbaugruppe 1.

Gemäß Fig. 1 und 5a und 5e ist der Leiter 9 der Flachspule 5 vollständig vom Material des Wärmeleitelements 29 umschlossen, wodurch der Leiter 9 ausreichend gegenüber dem Kernkörper 11 isoliert ist, um einen elektrischen Überschlag von dem Leiter 9 auf den Kernkörper 11 zu vermeiden. Rein theoretisch kann zusätzliche zwischen dem Leiter 9 und dem Kernkörper 11 eine durchgehend elektrisch isolierende Schicht 33, insbesondere eine Isolationsfolie, mit einer Durchschlagfestigkeit von D > 10 kV, insbesondere von D > 20 kV, insbesondere als Trägermaterial für das Wärmeleitelement 29 vorgesehen werden, wie dies beispielsweise in Fig. 3 gezeigt ist. In Fig. 3 durchdringt der Leiter 9 den unteren Litzenträger 13, wodurch eine derartige Schicht 33 erforderlich ist.

Alternativ kann der Isolationsschutz auch durch einen geschlossenen unteren Litzenträger 13 erreicht werden. Der Nachteil bei einer solchen Lösung ist allerdings ein i.d.R. höherer thermischer Widerstand zwischen Leiter 9 und unterem Litzenträger 13. Dieser kann z.B. reduziert werden, indem zwischen dem Leiter 9 und zumindest dem unterem Litzenträger 13 ein weitere thermisches Interfacematerial eingebracht wird.

Dies kann beispielsweise - wie in Fig. 5b dargestellt - durch eine zumindest teilweise wärmeleitende Ummantelung 34 des Leiters 9 erfolgen. Alternativ ist auch eine Beschichtung der aufnehmenden Kavität (Nut) in dem oberen und/oder unteren Litzenträger 19, 13 oder einem in diese Nut vor dem Einbringen des Leiters 9 dispensierten elastomeren Interfacematerial umgesetzt werden. Ein solches dispensiertes Material wird anschließend durch das Einbringen des Leiters 9 und das Zusammenführen des oberen und des unteren Litzenträgers 19, 13 im Spalt zwischen Leiter 9 und den Litzenträgern 13, 19 verpresst und füllt diesen zumindest teilweise aus. Um das Verdrängen des Interfacematerials in der Kavität zu vereinfachen, ist es sinnvoll, in der Nut in gewissen Abständen Bereiche ohne Interfacematerial vorzusehen. Für die Entwärmung des Leiters 9 sind diese begrenzten Bereiche mit schlechterer thermischer Anbindung unproblematisch, da das Kupfer der Litze bzw. des Leiters 9 eine sehr gute laterale Wärmleitfähigkeit besitzt und so die Entwärmung über benachbarte, gut thermisch angebundene Bereiche erfolgen kann.

Alternativ oder ergänzend können auch in dem oberen Litzenträger 19, der in der Montagereihenfolge auf die Einheit aus unterem Litzenträger 13, dispensiertem Interfacematerial und Leiter 9 aufgepresst wird, in regelmäßigen Abständen Entlüftungsöffnungen 35 (vgl., Fig. 5b) vorgesehen werden. Ebenso ist es denkbar, dass das Interfacematerial nach dem Zusammenbau von oberem und unterem Litzenträger 19 ,13 mit dem Leiter 9 über entsprechende Öffnungen und Kanäle in die Kavitäten eingepresst wird. In einer besonders bevorzugten Form werden Kanäle in lateraler Richtung zum Leiterverlauf in den Bereich zwischen zwei Leiter 9 geführt. Dadurch führt das ausgehärtete thermische Interfacematerial ebenfalls zu einer besseren mechanischen Verbindung des oberen und unteren Litzenträger 19, 13.

Für Litzenträger 12 in einer Leichtbauvariante entsprechend Fig. 3, Fig. 5c und Fig. 5d, bei welcher der untere und obere Litzenträger 13, 19 über Rippen 36 zu einer mechanischen Einheit verbunden werden und der Leiter 9 in eine verbleibende Kavität 37 dazwischen eingelegt wird, kann der Leiter 9 zur besseren thermischen Anbindung an den untere Litzenträger 13 geklebt werden. Alternativ kann auch die verbleibende Kavität 37 des unteren Litzenträgers 13 mit dem sich darin befindlichen, eingelegten Leiter 9 mit einem Vergussmaterial vergossen oder zumindest teilweise vergossen werden, so dass nach Aushärtung des Vergussmaterials (z.B. Epoxy-Harz) der Leiter 9 thermisch gut an den unteren Litzenträger 13 angebunden ist. Die thermische Anbindung des Leiters 9 an den unteren Litzenträger 13 ist bevorzugt mit einem thermischen Übergangswiderstand von kleiner 0,2 K/W, bevorzugt von kleiner 0,1 K/W umgesetzt.

Entsprechend der Fig. 5e ist zudem ein Litzenhalter 38 aus Kunststoff vorgesehen, der den Leiter 9 hält, wobei der Litzenhalter 38 und der Leiter 9 vollständig in eine Kunststoffmatrix des Litzenträgers 12 eingebettet sind und wobei der Leiter 9 mit einer die Wärmeleitung und die Haftung zur Kunststoffmatrix erhöhenden Beschichtung 39 überzogen ist. Der Litzenhalter 38 weist dabei C-förmige Öffnungen 40 auf, die ein einfaches Einclipsen der Leiter 9 der Flachspule 5 und damit ein einfaches Fixieren der Flachspule 5 ermöglichen. Anschließend wird der Leiter 9 mit der Kunststoffmatrix umgossen.

Mit der erfindungsgemäßen Bodenbaugruppe 1 lassen sich mehrere Vorteile erzielen:
- verbesserte Entwärmung und Belastung der Kernkörper 11 und dadurch hohe Lebensdauer und geringes Bruchrisiko, derselben,
- keine zusätzlichen aktiven Komponenten zur Verbesserung des Wärmetransportes, insbesondere keine Luftströmung,
- dünner Aufbau der thermischen Anbindung durch Verwendung wärmeleitender Stützen 15, insbesondere aus Metall,
- freier Bauraum für Elektronik-Komponenten inkl. Befestigungsmöglichkeiten für Elektronikkomponenten,
- einfacher und kostengünstiger Aufbau,
- flexibel an Leistungsklasse und Umgebungsbedingungen anpassbar,
- Funktionsintegration von Elektromagnetik - Elektronik - Thermik - Mechanik.

## Patentansprüche

1. Bodenbaugruppe (1) für eine induktive Ladevorrichtung (2) zum induktiven Laden eines auf einem Untergrund (6) abgestellten Kraftfahrzeugs (3),
- mit einer Grundplatte (8), die sich quer zu einer Abstandsrichtung (7) plattenförmig erstreckt,
- mit zumindest einer Flachspule (5), die einen spiralförmig gewundenen Leiter (9) aufweist und in Abstandsrichtung (7) zur Grundplatte (8) beabstandet ist,
- mit einer Kernanordnung (10) zur Magnetflussführung, die in Abstandsrichtung (7) zur Grundplatte (8) und zur Flachspule (5) beabstandet und zwischen der Grundplatte (8) und dem Leiter (9) angeordnet ist,
- wobei die Kernanordnung (10) zumindest einen Kernkörper (11) aufweist, der sich quer zur Abstandsrichtung (7) plattenförmig erstreckt,
- wobei zwischen dem zumindest einen Kernkörper (11) und der Grundplatte (8) ein unterer Hohlraum (14) ausgebildet ist,
- wobei zwischen zumindest einem Kernkörper (11) und der Grundplatte (8) zumindest eine Stütze (15) vorgesehen ist, die sich in Abstandsrichtung (7) durch den unteren Hohlraum (14) erstreckt,
- wobei zumindest eine Stütze (15) aus einem Material mit einer Wärmeleitfähigkeit von λ > 5 W/(m K) ausgebildet ist,
- wobei die Flachspule (5) einen Litzenträger (12) aufweist, der zumindest ein koaxial zu einer zugehörigen Stütze (15) angeordnetes Druckpodest (20) aufweist, über welchen der Litzenträger (12) auf einem zugehörigen Kernkörper (11) der Kernanordnung (10) aufliegt,
- wobei ein Wärmleitelement (29) vorgesehen ist, welches das Druckpodest (20) zumindest teilweise umgibt und den Litzenträger (12) wärmeübertragend mit dem Kernkörper (11) verbindet.

2. Bodenbaugruppe nach Anspruch 1,
**dadurch gekennzeichnet,**
**dass** die Grundplatte (8) als Kühlplatte (30) mit Kühlkanälen (25) ausgebildet ist.

3. Bodenbaugruppe nach Anspruch 1 oder 2,
**dadurch gekennzeichnet,**
**dass** das Wärmeleitelement (29) in Kunststoff, insbesondere in Silikon, eingebettete thermisch leitfähige Partikel aufweist, wobei der Kunststoff eine Shore Härte A < 10 aufweist.

4. Bodenbaugruppe nach einem der vorhergehenden Ansprüche,
**dadurch gekennzeichnet,**
- **dass** die zumindest eine Stütze (15) zumindest teilweise aus Grafit oder aus Keramik, insbesondere aus Aluminiumnitrid oder Aluminiumsilizid, ausgebildet ist, oder
- **dass** die zumindest eine Stütze (15) zumindest teilweise aus Metall, insbesondere aus Aluminium, ausgebildet ist.

5. Bodenbaugruppe nach einem der vorhergehenden Ansprüche,
**dadurch gekennzeichnet,**
**dass** das Wärmeleitelement (29) Ausnehmungen (32) aufweist, wobei eine Dichte und/oder eine Größe der Ausnehmungen (32) mit zunehmendem Abstand zum Druckpodest (20) zunimmt oder die Ausnehmungen (32) gleichmäßig verteilt angeordnet sind.

6. Bodenbaugruppe nach einem der vorhergehenden Ansprüche,
**dadurch gekennzeichnet,**
- **dass** das Wärmeleitelement (29) als separates Bauteil, insbesondere als Lochfolie, ausgebildet ist, oder
- **dass** das Wärmeleitelement (29) im Siebdruckverfahren auf den Litzenträger (12) aufgebracht ist, oder
- **dass** das Wärmeleitelement (29) im Siebdruckverfahren auf zumindest einen Kernkörper (11) der Kernanordnung (10) aufgebracht ist.

7. Bodenbaugruppe nach einem der vorhergehenden Ansprüche,
**dadurch gekennzeichnet,**
**dass** der Litzenträger (12) einen oberen Litzenträger (19) und einen unteren Litzenträger (13) aufweist, zwischen denen die Flachspule (5) angeordnet ist.

8. Bodenbaugruppe nach Anspruch 7,
**dadurch gekennzeichnet,**
**dass** der Leiter (9) der Flachspule (5) zumindest teilweise von einer wärmeleitenden Umhüllung (34) umgeben ist.

9. Bodenbaugruppe nach Anspruch 7 oder 8,
**dadurch gekennzeichnet,**
- **dass** der Leiter (9) der Flachspule (5) den unteren Litzenträger (13) durchdringt,
- **dass** zwischen dem Leiter (9) und dem Kernkörper (11) eine elektrisch isolierende Schicht (33), insbesondere eine Isolationsfolie, mit einer Durchschlagfestigkeit von D > 10 kV, insbesondere von D > 20 kV, angeordnet ist.

10. Bodenbaugruppe nach einem der Ansprüche 1 bis 6,
**dadurch gekennzeichnet,**
**dass** ein Litzenhalter (38) aus Kunststoff vorgesehen ist, der den Leiter (9) hält, wobei der Litzenhalter (38) und der Leiter (9) vollständig in eine Kunststoffmatrix eingebettet sind und wobei der Leiter (9) mit einer die Wärmeleitung und die Haftung zur Kunststoffmatrix erhöhenden Beschichtung (39) überzogen ist.

11. Bodenbaugruppe nach einem der vorhergehenden Ansprüche,
**dadurch gekennzeichnet,**
**dass** zwischen zumindest einer Stütze (15) und dem zugehörigen Kernkörper (11) eine Verteilerplatte (23) angeordnet ist, wobei die Verteilerplatte (23) über eine adhäsive Schicht (24) aus einem Material mit einer Wärmeleitfähigkeit von λ > 0,8 W/(m·K) und/oder einem Schubmodul von G < 10 MPa mit dem Kernkörper (11) verbunden ist.

12. Bodenbaugruppe nach einem der vorhergehenden Ansprüche,
**dadurch gekennzeichnet,**
**dass** an dem Litzenträger (12) Positionierelemente (31) zur Lagefixierung zumindest eines Kernkörpers (11) quer zur Abstandsrichtung (7) angeordnet sind.

13. Bodenbaugruppe nach einem der vorhergehenden Ansprüche,
**dadurch gekennzeichnet,**
- **dass** durch den unteren Hohlraum (14) ein Luftströmungspfad führt und/oder
- **dass** in dem unteren Hohlraum (14) zumindest ein elektronisches Bauteil (41), insbesondere eine Platine (28), angeordnet ist.

14. Bodenbaugruppe nach einem der vorhergehenden Ansprüche,
**dadurch gekennzeichnet,**
- **dass** die Bodenbaugruppe (1) auf der von der Grundplatte (8) abgewandten Seite der Flachspule (5) und in Abstandsrichtung (7) zu dieser beabstandet eine Deckplatte (17) aufweist,
- **dass** zwischen der Flachspule (5) und der Deckplatte (17) eine Platine (28) angeordnet ist.
